(19)

Europäisches Patentamt

European Patent Office

Office européen des brevets

(11) **EP 3 845 333 B1**

(12) **EUROPEAN PATENT SPECIFICATION**

(45) Date of publication and mention of the grant of the patent:
**31.05.2023 Bulletin 2023/22**

(21) Application number: **19853563.5**

(22) Date of filing: **27.08.2019**

(51) International Patent Classification (IPC):
**B22F 3/16** (2006.01)    **B22F 3/105** (2006.01)
**B33Y 10/00** (2015.01)    **B33Y 30/00** (2015.01)
**B22F 10/364** (2021.01)    **B22F 10/25** (2021.01)
**B22F 10/28** (2021.01)    **B22F 10/50** (2021.01)
**B22F 12/43** (2021.01)    **B23K 9/04** (2006.01)
**B23K 15/00** (2006.01)    **B23K 26/06** (2014.01)
**B23K 26/342** (2014.01)

(52) Cooperative Patent Classification (CPC):
(C-Sets available)
**B22F 10/25; B22F 10/28; B22F 10/364;
B22F 10/50; B22F 12/43; B23K 9/042;
B23K 15/0086; B23K 26/0604; B23K 26/342;
B33Y 10/00; B33Y 30/00;** B22F 2999/00;
Y02P 10/25                                    (Cont.)

(86) International application number:
**PCT/JP2019/033422**

(87) International publication number:
**WO 2020/045383 (05.03.2020 Gazette 2020/10)**

(54) **METAL ADDITIVE MANUFACTURING METHOD**

VERFAHREN ZUR HERSTELLUNG VON METALLADDITIVEN

PROCÉDÉ DE FABRICATION ADDITIVE DE PRODUIT MÉTALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018   JP 2018163720**

(43) Date of publication of application:
**07.07.2021   Bulletin 2021/27**

(73) Proprietor: **Osaka University**
**Suita-shi, Osaka 565-0871 (JP)**

(72) Inventors:
• **SANO,Tomokazu**
**Suita-shi, Osaka 565-0871 (JP)**
• **HIROSE, Akio**
**Suita-shi, Osaka 565-0871 (JP)**
• **SANO, Yuji**
**Suita-shi, Osaka 565-0871 (JP)**

(74) Representative: **Henkel & Partner mbB
Patentanwaltskanzlei, Rechtsanwaltskanzlei
Maximiliansplatz 21
80333 München (DE)**

(56) References cited:
**WO-A1-2017/123107        CN-A- 107 186 214
JP-A- 2006 045 584        JP-A- 2007 270 227
JP-A- 2011 173 420        JP-A- 2018 100 954
US-A1- 2015 041 025        US-A1- 2017 087 670**

• **Munther Michael ET AL: "Engineering Research Express Laser shock peening and its effects on microstructure and properties of additively manufactured metal alloys: a review", Eng. Res. Express, 17 June 2020 (2020-06-17), page 22001, XP055908331, Retrieved from the Internet: URL:https://cwst.com/wp-content/uploads/2020/09/Review-of-LP-for-AM-Hackel-Davami.pd f [retrieved on 2022-04-04]**

(52) Cooperative Patent Classification (CPC): (Cont.)

C-Sets
B22F 2999/00, B22F 10/50, B22F 12/43

**Description**

TECHNICAL FIELD

The present invention relates to a technique for improving various characteristics of metal additive manufacturing by pulse-laser irradiation.

BACKGROUND

Metal additive manufacturing (AM) is a technology for three-dimensionally forming a desired shape by outputting an energy beam such as a laser, an electron beam, or a plasma to a continuously supplied powdery or wire-shaped metal material, and then repeating melting and solidification of this supplied metal material. In this metal additive manufacturing, a target product can be directly formed from digital data showing the shape, so the mold that is indispensable for casting and forging becomes unnecessary. Thus, cost of small-quantity products can be reduced, development lead time can be shortened, and a complicated three-dimensional structure such as a lattice structure can be integrally formed.

A product of metal additive manufacturing can be regarded as an aggregate of multi-pass welding because it undergoes a process in which a powdery or wire-shaped solid metal is once melted and solidified. For this reason, the product of metal additive manufacturing is composed of: a solidified portion having been melted and solidified; and a heat-affected portion that is not melted and remains in a solid phase but is affected by heat. Generally, these solidified portion and heat-affected portion are inferior to the base substance in terms of mechanical characteristics (for example, hardness, tensile strength, and fracture toughness) and various characteristics such as corrosion resistance and fatigue characteristics (fatigue life, fatigue strength).

Since the volume of the metal material to be laminated shrinks when it melts and solidifies, residual stress in the tensile direction is generated in the product of metal additive manufacturing. This tensile residual stress leads to deterioration of the above-described various characteristics. In addition, the larger the difference in linear expansion coefficient between the base substance and the laminated metal becomes, the more the tensile residual stress causes distortion (bending) of the base substance, cracking of the laminated metal, and deterioration of the dimensional accuracy of the product of metal additive manufacturing.

In order to suppress deterioration of various characteristics of metal additive manufacturing due to this tensile residual stress, in a known method (for example, Patent Document 1), each time each layer constituting the laminated body is deposited, the surface of this layer is subjected to laser peening. When laser peening is performed, compressive residual stress is introduced into the solidified metal so as to relax the existing tensile residual stress, and thereby, the above-described various characteristics can be further improved.

PRIOR ART DOCUMENT

PATENT DOCUMENT

[Patent Document 1] U.S. Patent Application Publication No. 2017/0087670

US 2015 041 025 A1 discloses an apparatus and a method for forming a metallic component by additive layer manufacturing. The method includes the steps of using a heat source such as a laser to melt the surface of a work piece and form a weld pool; adding wire or powdered metallic material to the weld pool and moving the heat source relative to the work piece so as to progressively form a new layer of metallic material on the work piece; applying forced cooling to the formed layer; stress relieving the cooled layer by applying a peening step, for example with a pulsed laser, and repeating the above steps as required to form the component layer by layer.

US 2017 087 670 A1 discloses a method for manufacturing an object including the steps of forming layers by adding successive layers of material to form the object by selective laser melting (SLM), and inducing plastic deformation and residual stress into solidified material of at least one of the successive layers of material to improve mechanical properties and a fatigue resistance of the object, wherein the plastic deformation and the residual stress are induced by a laser.

CN 107 186 214 A discloses a method comprising additive manufacturing and laser shock peening, in particular the document describes a combining device for laser heating power layer-by-layer interaction additive manufacturing. The combining device works alternately through a laser shock peening module and a selective laser melting module, laser shock peening is simultaneously carried out on a formed part in the forming process of the formed part, and the peening effect on the formed part is more thorough.

US 2020 189 037 A is directed to the additive manufacturing field and laser shock peening (LSP) field, in particular to a combined apparatus for layer-by-layer interactive additive manufacturing with laser thermal/mechanical effects. In the apparatus, a LSP module and a SLM module operate in alternate so as to perform LSP for the formed part in the forming process of the formed part, and thereby a better strengthening effect of the formed part is achieved.

SUMMARY

PROBLEMS TO BE SOLVED BY INVENTION

In the general laser peening disclosed in the above-described patent documents and the like, a nanosecond pulse laser having a pulse width of several nanoseconds is adopted. In the case of nanosecond laser peening, a transparent medium such as water is installed on the surface of the solidified metal, expansion of the ablation plasma to be generated on the irradiation surface of the solidified metal by laser irradiation is confined, and a plastic shock wave is propagated inside the structure to introduce compressive residual stress.

Thus, in the known technique disclosed in the above-described patent document and the like, each time each layer of the solidified metal is deposited, a transparent medium for a laser is disposed as a sacrificial layer on its top face. After laser irradiation, the process of removing this sacrificial layer and then laminating the next solidified metal is repeated. For this reason, not only the manufacturing time of a metal additive manufacturing product is prolonged, there is a concern that the above-described various characteristics of the metal additive manufacturing may be deteriorated when a part of the sacrificial layer is not completely removed but remains as an inclusion.

In view of the above-described circumstances, an object of the present invention is to provide a metal additive manufacturing technique that can improve various characteristics by irradiation of a pulse laser without disposing a transparent medium.

SOLUTION TO PROBLEM

The above object is achieved by a metal additive manufacturing method according to claim 1. The dependent claims are directed to different advantageous aspects of the invention.

EFFECTS OF INVENTION

According to the present invention, a metal additive manufacturing technique that can improve various characteristics by irradiation of a pulse laser without disposing a transparent medium is provided.

BRIEF DESCRIPTION OF DRAWINGS

Fig. 1A shows a block diagram of a metal additive manufacturing device according to the first example not completely covered by the present invention, Fig. 1B shows a longitudinal cross-sectional view of a product of metal additive manufacturing in a deposition process, and Fig. 1C shows a top view thereof.

Fig. 2A shows an enlarged cross-sectional view showing an example of a probe tip of the metal additive manufacturing device according to the first to third examples, and Fig. 2B shows an enlarged cross-sectional view showing another example of the probe tip in the first to third examples.

Fig. 3A shows an enlarged cross-sectional view showing still another example of the probe tip in the first to third examples, and Fig. 3B shows an enlarged cross-sectional view showing still another example of the probe tip in the first to third examples.

Fig. 4A shows a configuration diagram of a metal additive manufacturing device according to the fourth example of the present invention, and Fig. 4B shows a schematic diagram showing its operation.

Fig. 5A to Fig. 5F show process diagrams illustrating a metal additive manufacturing method according to the fourth example.

Fig. 6A shows a cross-sectional structure observation view of a product of metal additive manufacturing according to each example of the present invention, and Fig. 6B shows a cross-sectional structure observation view of a product of metal additive manufacturing when pulse-laser irradiation is not performed as a comparative example.

DETAILED DESCRIPTION

(First Example)

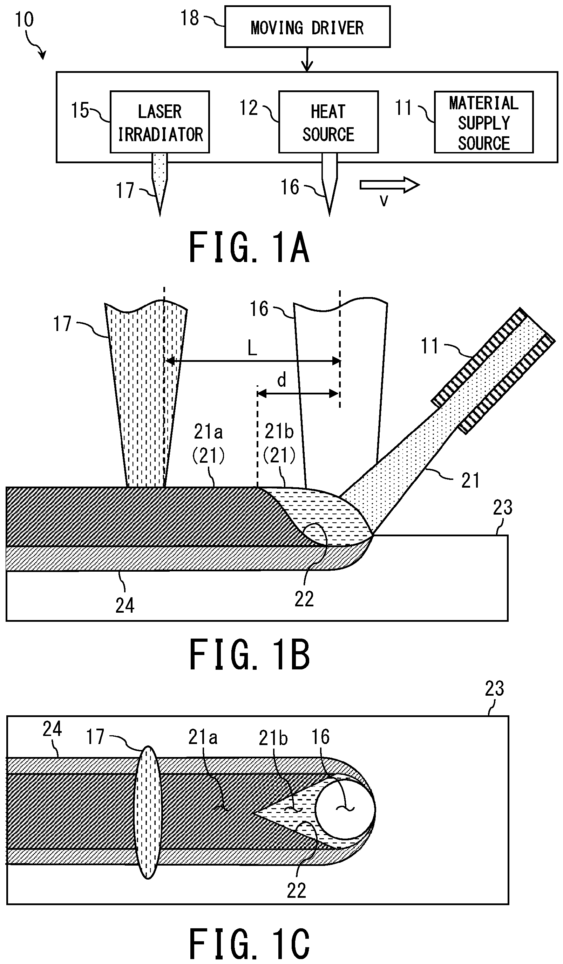

Hereinafter, examples of the present invention and comparative examples, not covered by the invention, will be described by referring to the accompanying drawings. According to the invention, only those examples making use of a pulse laser exhibiting a power density of $10^{12}$ W/cm$^2$ or more at an irradiation position belong to the invention. In other words, the first example allowing an operation of the pulse laser exhibiting a power density of $10^7$ W/cm$^2$ or more is only covered by the invention in the extend that the power density reaches $10^{12}$ W/cm$^2$ or more. Fig. 1A shows a block diagram of a metal additive manufacturing device 10 according to the first example of the present invention. Fig. 1B shows a longitudinal cross-sectional view of a product of metal additive manufacturing in a deposition process. Fig. 1C shows a top view thereof.

The metal additive manufacturing device 10 includes: a material supply source 11 that supplies a material 21 to be deposited; a heat source 12 that outputs an energy beam 16 so as to melt the material 21; a moving driver 18 that scans at least the energy beam 16; a laser irradiator 15 that irradiates a solidified portion 21a of the material 21 in a temperature lowering process with a pulse laser 17.

The moving driver 18 drives the heat source 12, the laser irradiator 15, and the material supply source 11 such that the energy beam 16, the pulse laser 17 and the material 21 are scanned along the object to be deposited. The operation of the moving driver 18 includes: a case where the heat source 12, the laser irradiator 15, and the material supply source 11 are moved two-dimensionally or three-dimensionally; a case where each of them is rotationally driven; and a case where a reflecting mirror of the laser is rotationally driven.

In this example, the moving driver 18 is illustrated to keep the object to be deposited stationary and move the heat source 12, the laser irradiator 15, and the material supply source 11, but this relationship may be reversed. The pulsed laser 17 may be stopped and radiated or may be discretely moved and radiated.

Although Fig 1 exemplifies a case of the material supply source 11 supplying the powder as the material 21, the material supply source 11 may supply a wire as described below. Although Fig 1 exemplifies a case of the heat source 12 outputting a laser beam as the energy beam 16, the heat source 12 may output an arc or an electron beam as described below. In the first example, the material (i.e., metal powder) 21 is injected and melted while being scanned along with the energy beam 16.

When the material 21 melts on the surface of the base substance 23, a part of the base substance 23 is also entangled and melted to form a molten portion 21b. A solidified portion 21a in which the molten portion 21b is solidified is deposited along the scanning locus on the surface of the base substance 23. Further, of the base substance 23, the portion that does not melt but is affected by heat is formed as a heat-affected portion 24.

Although the drawings illustrate the case where the solidified portion 21a of the material 21 of the first layer is deposited on the base substance 23, the same applies to the case where the n-th layer (n≥2) of the solidified portion 21a of the material 21 is deposited. In this case, the above-described "base substance 23" will be displaced with "the (n-1)th layer (n≥2) of the solidified portion 21a".

The pulsed laser 17 to be radiated from the laser irradiator 15 has a predetermined pulse energy [J] and a pulse width [s]. A focused optical system (not shown) composed of a lens or a concave mirror converges the beam diameter of the pulse laser and outputs the pulse laser 17 having an enhanced power density [W/cm$^2$]. Here, when the pulse peak power is defined as P[W], the pulse width is defined as $\tau$[s], the pulse energy is defined as E[J], and the beam diameter is defined as $\varphi$[cm], the power density I is expressed by Expression 1 as follows.

$$I = P/S = E/\tau S \qquad\qquad \text{Expression 1}$$

(wherein

$$P = E/\tau, \quad S = \pi\varphi^2/4$$

)

When the solidified portion 21a of the material 21 is irradiated by the pulsed laser 17, a shock wave is propagated inside the solidified portion 21a. The irradiation of the pulse laser 17 may be performed on each layer respectively or may be performed on a plurality of layers at once. Fig. 1 illustrates the case where the irradiation of the pulse laser 17 is performed simultaneously with the output of the energy beam 16 and is performed on the solidified portion 21a in the temperature lowering process immediately after solidification of the molten portion 21b. However, the irradiation of the pulse laser 17 is not limited to the above-described case but may be performed on the solidified portion 21a in the cooling process after stopping the output of the energy beam 16. The "temperature lowering process" refers to the period, right after the formation of the solidified portion 21a, that the melting point temperature drops to room temperature, and is not limited to the period during which the temperature gradient shows a negative value as long as the temperature drops in a wide range. For example, a period during which the temperature temporarily rises before dropping to room temperature is also included in the "temperature lowering process".

The pulse laser 17 preferably has a power density of $10^7$ W/cm$^2$ or more at the irradiation position. When the power density of the pulsed laser 17 is set in such a range, at least an elastic shock wave can be internally propagated in the solidified portion 21a. When this elastic shock wave internally propagates to the solidified portion 21a and reaches a solid-liquid interface 22 with the molten portion 21b, the crystals growing at the solid-liquid interface 22 can be miniaturized.

In general, when a substance is irradiated by the pulsed laser 17 having a high power density, a high-temperature and high-pressure state is momentarily formed on the surface, and thereby, ablation , i.e., explosive evaporation due to violent ionization and/or plasma formation, occurs. When ablation occurs on the surface of a material, the shock wave generated by the evaporation recoil-force propagates inside the material. When the power density of the pulse laser 17 is smaller than $10^7$ W/cm$^2$, sufficient laser ablation for generating a shock wave does not occur at the irradiation spot of the pulse laser 17.

A shock wave propagates in a solid substance at a speed faster than the speed of sound and faster than an ultrasonic wave propagating at the speed of sound. A shock wave having a pressure below a certain value is classified as an elastic shock wave that causes reversible deformation of a solid substance but does not cause permanent deformation. A shock wave having a pressure of a certain value or more is classified as a plastic shock wave that causes permanent deformation of a substance. This plastic shock wave follows the elastic shock wave and propagates in the solid substance.

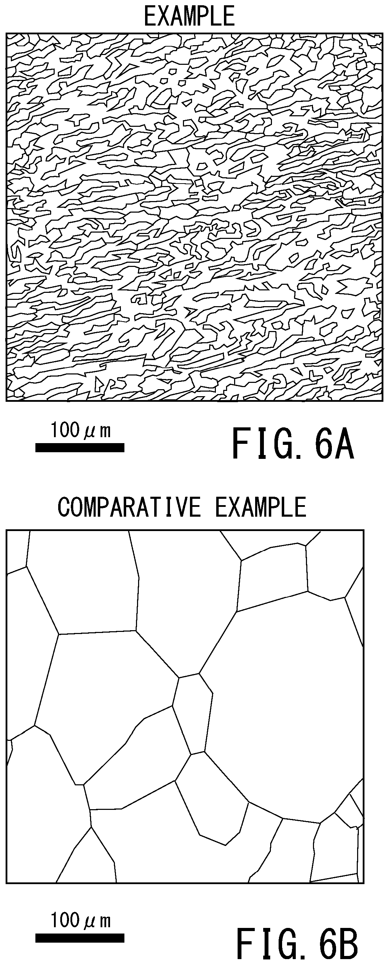

When the elastic shock wave internally propagating from the irradiation spot of the solidified portion 21a reaches a part of the solid-liquid interface 22 with the molten portion 21b, it becomes a Rayleigh wave and propagates uniformly over the entire surface of the solid-liquid interface 22. The elastic shock wave having reached the solid-liquid interface 22 further causes cavitation in the process of propagating the molten portion 21b, divides dendrite branches, and suppresses generation of columnar crystals that try to grow in the same direction. Consequently, the solidified nucleation in the molten portion 21b is activated, and the metallographic structure of the solidified portion 21a is refined (Fig. 6A).

(Second Example)

In the metal additive manufacturing device 10 according to the second example, the pulse laser 17 to be outputted by the laser irradiator 15 has a power density of $10^{12}$ W/cm$^2$ or more at the irradiation position. In the second example, a plastic shock wave is generated in addition to the elastic shock wave by radiating the pulse laser 17 having a power density higher than that in the first example.

When the generated plastic shock wave propagates in a solid phase such as the solidified portion 21a and the heat-affected portion 24, new dislocations are introduced and the dislocation density in the crystal increases. The dislocations accumulated in the solidified portion 21a, which is in the hot state after solidification of the molten portion 21b, move to be rearranged in the crystal grains so as to become a low energy structure. As a result, new grain boundaries are generated in the crystal grains, the metallographic structure is refined, and the mechanical characteristics of the solidified portion 21a and the heat-affected portion 24 are improved.

The rearrangement of dislocations in the crystal grains is completed in a short time at a temperature of 40% or more of the absolute temperature value of the melting point $T_m$ of the material 21. In consideration of this fact, according to the invention, irradiation of the pulse laser 17 is performed in the temperature lowering process in which the temperature T of the solidified portion 21a is in the range of $0.4T_m \leq T < T_m$ after stopping the output of the energy beam 16.

Here, a case where a new solidified portion (not shown) is further laminated on the existing solidified portion 21a will be discussed. Also in this case, when the pulse laser 17 is radiated, a plastic shock wave is induced and propagates to the further lower layer while miniaturizing the metallographic structure of the new solidified portion (not shown). Consequently, the metallographic structure of the existing solidified portion 21a is further refined (miniaturized).

As shown in the parentheses of Expression 1, the pulse laser 17 can instantaneously realize a high peak power P by shortening the pulse width $\tau$ corresponding to the oscillation duration. Specifically, short pulse lasers such as a nanosecond pulse laser, a picosecond pulse laser, and a femtosecond pulse laser are preferably used.

Specifications (A) of a short pulse laser that induces at least an elastic shock wave as in the first example and specifications (B) of a short pulse laser that induces an elastic shock wave and a plastic shock wave as in the second example are as follows.

(A) Specifications of a short pulse laser that induces at least an elastic shock wave in a solidified portion 21a

Pulse Width: 100 [ns] or less
Power Density: $1 \times 10^7$ [W/cm$^2$] or more

(B) Specifications of a short pulse laser that induces an elastic shock wave and a plastic shock wave in the solidified portion 21a

Pulse Width: 100 [ps] or less
Power Density: $1 \times 10^{12}$ [W/cm$^2$] or more

When the material 21 and the base substance 23 are precipitation hardening alloys such as duralumin, due to the heat input of the energy beam 16, the precipitated phase in the solidified portion 21a is solid-solved in the parent phase, and the mechanical characteristics of the solidified portion 21a and the heat-affected portion 24 are deteriorated as compared with the base metal.

In such a state, when the plastic shock wave is propagated to the solidified portion 21a and the heat-affected portion 24 which are in a hot state with sufficient residual heat remaining immediately after solidification, lattice defects are induced in the parent phase at high density, and these lattice defects become nucleation sites, and precipitation hardening elements having been supersaturated in the parent phase are precipitated. As a result, the precipitation hardening that once disappeared in the solidified portion 21a and the heat-affected portion 24 is restored and the mechanical characteristics are improved.

Materials of the material 21 expected to have the above-described effects of work hardening and precipitation hardening include materials that soften due to heat input, such as aluminum alloys, high-strength steels, and work-hardened austenitic stainless steels. In particular, materials of precipitation-hardened alloys to be used include Al alloys (2000 series, 6000 series, 7000 series), Ni-based heat-resistant superalloys (Inconel 718, and the like), and precipitation hardening stainless steels (SUS630, SUS631, maraging steel, and the like).

(Third Example)

In the metal additive manufacturing device 10 according to the third example, the pulse laser 17 is scanned while maintaining a predetermined interval L from the energy beam 16. At this time, the temperature of the solid-liquid interface 22 between the solidified portion 21a and the molten portion 21b is the melting point $T_m$ of the material 21. The distance between the upstream end irradiated with the pulse laser 17 and the solid-liquid interface 22 is expressed as "L-d". Here, "d" is the distance between the heat source center of the energy beam 16 and the solid-liquid interface 22, and is measured in advance. The scanning speed v is determined in such a manner that the solidified portion 21a is in the best state when the pulse laser 17 is not radiated. The cooling speed g(v) of the solidified portion 21a with respect to the scanning speed v is measured in advance.

The temperature T at the upstream end where the pulse laser 17 is radiated is expressed by Expression 2.

$$T = T_m - g(v) \cdot (L-d)/v \qquad \qquad \text{Expression 2}$$

Since $T_m$, d, g(v), and v are known in Expression 2, the temperature T at the upstream end onto which the pulse laser 17 is radiated can be determined by changing L. Further, it can be said from Expression 2 that the solidified portion 21a irradiated with the pulse laser 17 is in the process of lowering the temperature as long as the energy beam 16 is scanned.

The elastic shock wave induced by the pulse laser 17 propagates in the solidified portion 21a and is greatly attenuated. Hence, the interval L between the pulse laser 17 and the energy beam 16 is kept constant, and thus, the pressure of the elastic shock wave reaching the solid-liquid interface 22 is kept constant. As a result, the miniaturization of the metallographic structure in the solidified portion 21a can be made uniform.

In addition, amount of dislocations to be introduced due to the plastic shock wave induced by the pulse laser 17 depends on the temperature of the solidified portion 21a, and miniaturization of the metallographic structure largely also depends on the temperature of the solidified portion 21a. Since the interval L between the pulse laser 17 and the energy beam 16 is kept constant, the temperature of the solidified portion 21a at the irradiation spot of the pulse laser 17 is controlled so as to be constant. As a result, the amount of dislocations to be introduced in the solidified portion 21a and the miniaturization of the metallographic structure can be made uniform.

An X-ray residual stress measuring device (not shown) may be included in the metal additive manufacturing device 10, and thereby, the state of the residual stress can be measured in real time in the process of forming the solidified portion 21a. The distance L between the pulse laser 17 and the energy beam 16 can be adjusted to be optimized on the basis of the measurement result of the residual stress state. When the residual stress is measured by the X-ray residual stress measuring device after stacking one or more layers of the solidified portion 21a, if the tensile residual stress remains above a certain value, only the pulse laser 17 may be radiated such that the stress becomes below the certain value.

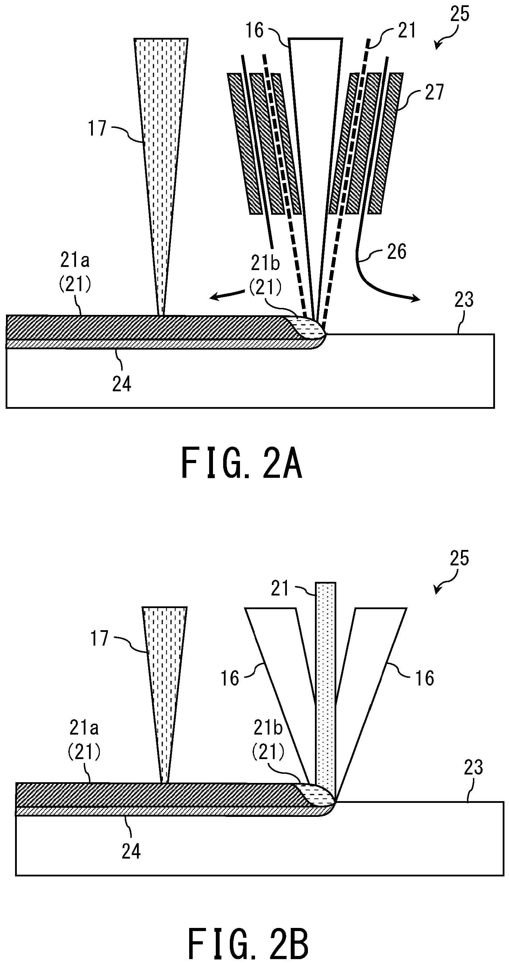

Fig. 2A shows an enlarged cross-sectional view showing an example of a probe tip 25 of the metal additive manufacturing device according to the first to third examples. In Fig. 2A, components having the same configuration and/or function as those in Fig. 1 are indicated by the same reference signs, and duplicate description is omitted. In Fig.

2A, a laser beam, which is an energy beam 16, is emitted from an irradiation port provided in the center of the nozzle 27. Additionally, the metal powder that is the material 21 is supplied from the supply holes provided around the irradiation port of the laser beam. Further, purge gas 26 for inactivating the ambient atmosphere of the molten portion 21b is supplied from the nozzle 27.

Fig. 2B shows an enlarged cross-sectional view showing another example of the probe tip 25 in the first to third examples. In Fig. 2B, components having the same configuration and/or function as those in Fig. 1 are indicated by the same reference signs, and duplicate description is omitted. In Fig. 2B, the metal powder that is the material 21 is supplied along the central axis, and the laser beam that is the energy beam 16 is radiated so as to intersect the central axis in an oblique direction.

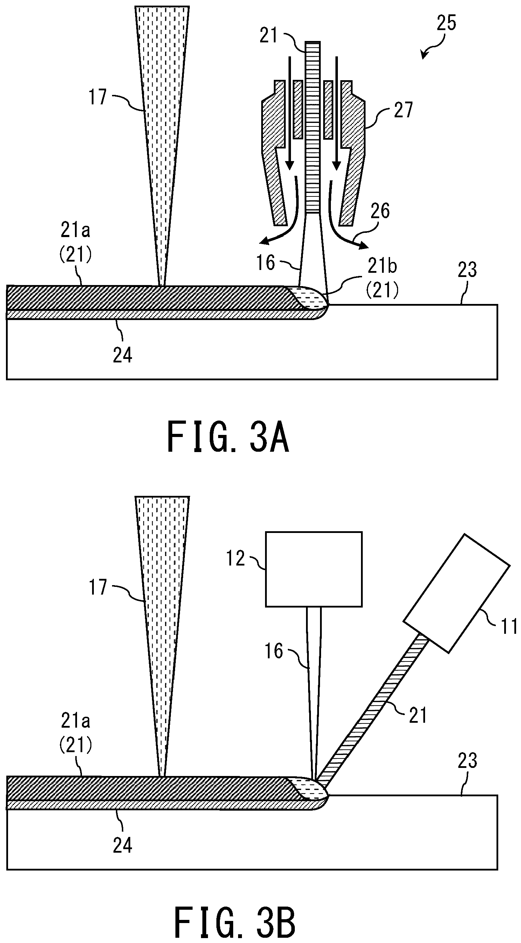

Fig. 3A shows an enlarged cross-sectional view showing still another example of the probe tip 25 in the first to third examples. In Fig. 3A, components having the same configuration and/or function as those in Fig. 1 are indicated by the same reference signs, and duplicate description is omitted. In Fig. 3A, the wire that is the material 21 is supplied from the supply holes provided in the center of the nozzle 27. Additionally, the arc that is the energy beam 16 is discharged by setting a potential difference between the wire (i.e., material 21) and the base substance 23. Further, the purge gas 26 for inactivating the ambient atmosphere of the molten portion 21b is supplied from the nozzle 27.

Fig. 3B shows an enlarged cross-sectional view showing still another example of the probe tip in the first to third examples. In Fig. 3B, components having the same configuration and/or function as those in Fig. 1 are indicated by the same reference signs, and duplicate description is omitted. In Fig. 3B, the wire that is the material 21 is supplied from the material supply source 11. Further, the electron beam that is the energy beam 16 is outputted from an electron gun that is the heat source 12. Moreover, in order to inactivate the ambient atmosphere of the molten portion 21b and stabilize the electron beam, the entirety including the base substance 23 is evacuated. When an electron beam is used for the energy beam 16, the beam direction is changed by a lens using a magnetic field, and thus, there is no mechanical movement, and the electrical control of the electron beam enables high-speed positioning. When the wire is used as the material 21, a laser beam may be used as the energy beam 16.

(Fourth Example)

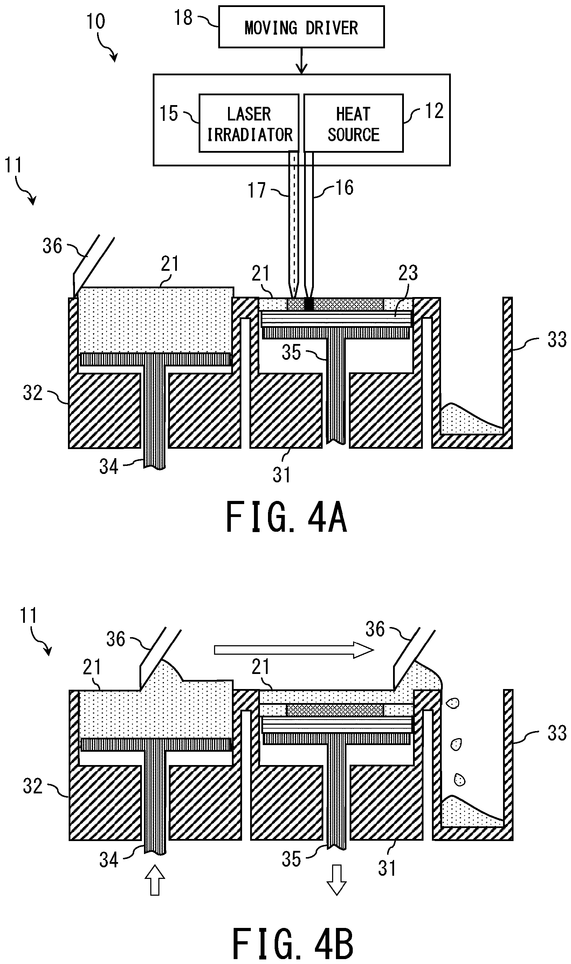

Fig. 4A shows a configuration diagram of the metal additive manufacturing device according to the fourth example of the present invention, and Fig. 4B shows a schematic diagram showing its operation. In Fig. 4, components having the same configuration and/or function as those in Fig. 1 are indicated by the same reference signs, and duplicate description is omitted. In the fourth example, the energy beam 16 can employ any one of a laser beam and an electron beam.

The moving driver 18 of the fourth example drives the heat source 12 and the laser irradiator 15 such that the energy beam 16 and the pulse laser 17 are scanned along the material 21 having been thinly spread over. The operation of the moving driver 18 includes: the case where the heat source 12 and the laser irradiator 15 are moved in a plane; the case where each of them is rotationally driven; and the case where the laser reflector is rotationally driven.

The material supply source 11 of the metal additive manufacturing device 10 according to the fourth example includes: a first receptor 31 that spreads over the powder as the material 21 on a descending first stage 35 and inputs the energy beam 16 and the pulse laser 17; a second receptor 32 that holds the powder as the material 21 together with an ascending second stage 34; and a transfer driver 36 that transfers the powder (i.e., material 21) having protruded from the top of the second receptor 32 onto the first stage 35 of the first receptor 31.

As shown in Fig. 4B, the second stage 34 rises by several tens of um per step, and the transfer driver 36 scrapes the lifted powder 21 and moves it toward the first receptor 31. The first stage 35 of the first receptor 31 descends by the thickness of one deposited layer, and the powder 21 is supplied by the transfer driver 36 to the space available by the descent and to be spread over. The surplus powder 21 falls into a third receptor 33 to be stored and reused.

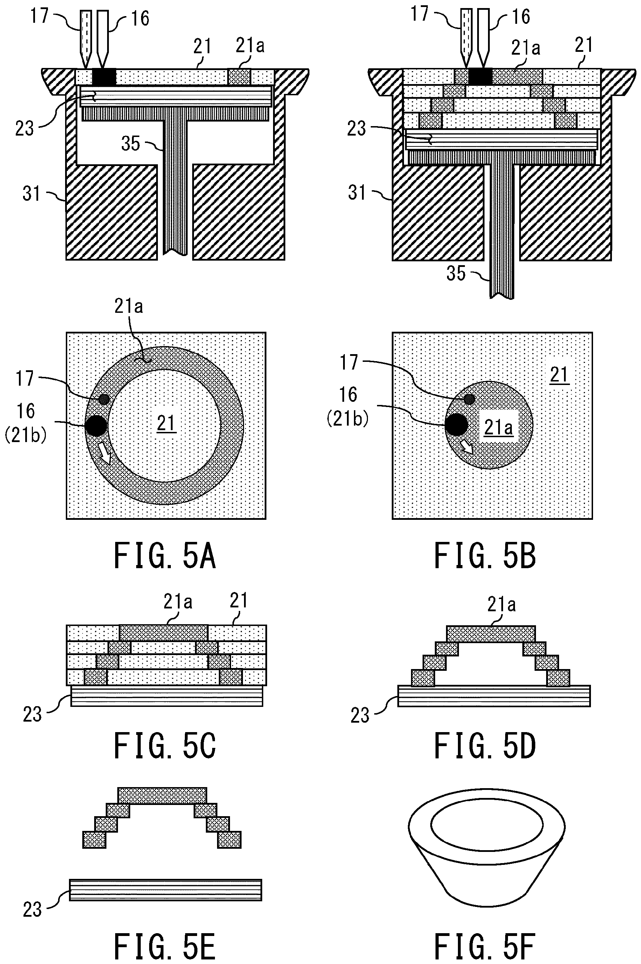

Fig. 5A to Fig. 5F show process diagrams illustrating a metal additive manufacturing method according to the fourth example. As shown on the upper side of Fig. 5A, the base substance 23 is fixed on the top face of the first stage 35 and the first layer of the material (i.e., metal powder) 21 is spread over on this base substance 23. Further, as shown on the lower side of Fig. 5A, the energy beam 16 and the pulse laser 17 circularly scan to melt and solidify the material 21, and thereby, the solidified portion 21a is deposited.

When the scanning of the energy beam 16 and the pulse laser 17 for the first layer is completed, the first stage 35 is lowered by the thickness of one layer (i.e., stacking pitch), a new material 21 is spread over there, and the energy beam 16 and the pulse laser 17 circularly scan to form the solidified portion 21a.

Afterward, as shown in Fig. 5B, the descent of the first stage 35 is repeated a plurality of times, and thereby, the solidified portion 21a is sequentially laminated to form a product. Further, as shown in Fig. 5C, this product is taken out together with the unmelted material (i.e., metal powder) 21 and base substance 23. Further, the unmelted material (i.e., metal powder) 21 is removed as shown in Fig. 5D, then the base substance 23 is separated as shown in Fig. 5E, and then the product is taken out as shown in Fig. 5F.

Fig. 6A shows a cross-sectional structure observation view of a product of metal additive manufacturing according to each example of the present invention, and Fig. 6B shows a cross-sectional structure observation view of a product of metal additive manufacturing when irradiation of the pulse laser 17 is not performed as a comparative example. As shown in Fig. 6A, the elastic shock wave induced by the irradiation of the pulse laser 17 inhibits the growth of crystal grains in the solid-liquid interface 22 of molten portion 21b, and the induced plastic shock wave increases the dislocation density of the solidified portion 21a, thereby new grain boundaries are formed in the crystal grains. As a result, the metallographic structure being miniaturized is observed.

According to the metal additive manufacturing device of at least one example as described above, a metallographic structure can be miniaturized by radiating a pulse laser to propagate a shock wave without using a transparent medium (for example, water).

REFERENCE SIGNS LIST

| | |
|---|---|
| 10 | metal additive manufacturing device |
| 11 | material supply source |
| 12 | heat source |
| 15 | laser irradiator |
| 16 | energy beam (laser beam, electron beam, arc discharge) |
| 17 | pulse laser |
| 18 | moving drive |
| 21 | material (metal powder, wire) |
| 21a | solidified portion |
| 21b | molten portion |
| 22 | solid-liquid interface |
| 23 | base substance |
| 24 | heat-affected portion |
| 25 | probe tip |
| 26 | purge |
| 27 | nozzle |
| 31 | first receptor |
| 32 | second receptor |
| 33 | third receptor |
| 34 | second stage |
| 35 | first stage |
| 36 | transfer driver |

**Claims**

1. A metal additive manufacturing method comprising:

   supplying a material (21) to be deposited;
   melting the material (21) by outputting an energy beam (16) while the energy beam (16) is being scanned; and
   irradiating a solidified portion of the material (21a) with a pulse laser (17) having a power density of $10^{12}$ W/cm$^2$ or more at an irradiation position thereby creating a plastic shock wave propagating in the solidified portion of the material (21a),
   scanning the pulsed laser (17) while maintaining a predetermined interval from the energy beam (16) in order to have the solidified portion in a temperature lowering process after being melted and solidified and in a temperature range of $0.4T_m \leq T < T_m$, wherein T is a temperature of the material (21) and $T_m$ is a melting point of the material (21).

2. The metal additive manufacturing method according to claim 1 wherein the material (21) is supplied to an output destination of the energy beam (16).

**Patentansprüche**

1.  Ein additives Metallherstellungsverfahren, umfassend:

    Zuführen eines zu abzuscheidenden Materials (21);
    Schmelzen des Materials (21) durch Ausgeben eines Energiestrahls (16), während der Energiestrahl (16) abtastet; und
    Bestrahlen eines verfestigten Abschnitts des Materials (21a) mit einem Pulslaser (17) mit einer Leistungsdichte von $10^{12}$ W/cm$^2$ oder mehr an einer Bestrahlungsposition, wodurch eine plastische Schockwelle erzeugt wird, die sich in dem verfestigten Abschnitt des Materials (21a) ausbreitet,
    Abtasten durch den gepulsten Laser (17), während ein vorbestimmter Abstand zum Energiestrahl (16) beibehalten wird, um den verfestigten Abschnitt in einem Temperatursenkungsprozess zu haben, nachdem er geschmolzen und verfestigt wurde, und in einem Temperaturbereich von $0{,}4T_m \leq T < T_m$ , wobei T eine Temperatur des Materials (21) ist und $T_m$ ein Schmelzpunkt des Materials (21) ist.

2.  Das additive Metallherstellungsverfahren nach Anspruch 1, bei dem das Material (21) einem Ausgangsziel des Energiestrahls (16) zugeführt wird.

**Revendications**

1.  Procédé de fabrication additive de produit métallique comprenant :

    la fourniture d'un matériau (21) à déposer;
    la fusion du matériau (21) par sortie d'un faisceau d'énergie (16) alors que le faisceau d'énergie (16) est en train d'être balayé ; et
    l'irradiation d'une portion solidifiée du matériau (21a) avec un laser à impulsions (17) présentant une densité de puissance de $10^{12}$ W/cm$^2$ ou plus dans une position d'irradiation créant ainsi une onde de chocs plastiques se propageant dans la portion solidifiée du matériau (21a),
    le balayage du laser à impulsions (17) tout en maintenant un intervalle prédéterminé par rapport au faisceau d'énergie (16) afin que la portion solidifiée soit dans un processus d'abaissement de température après avoir été fondue et solidifiée et dans une plage de température de $0{,}4\, T_m \leq T < T_m$, dans lequel T est une température du matériau (21) et $T_m$ est un point de fusion du matériau (21).

2.  Procédé de fabrication additive de produit métallique selon la revendication 1, dans lequel le matériau (21) est fourni à une destination de sortie du faisceau d'énergie (16).

FIG. 1A

FIG. 1B

FIG. 1C

FIG. 2A

FIG. 2B

FIG. 3A

FIG. 3B

FIG. 4A

FIG. 4B

FIG. 5A

FIG. 5B

FIG. 5C

FIG. 5D

FIG. 5E

FIG. 5F

EXAMPLE

100 $\mu$ m

FIG. 6A

COMPARATIVE EXAMPLE

100 $\mu$ m

FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170087670
- US 2015041025 A1
- US 2017087670 A1
- CN 107186214 A
- US 2020189037 A